# EUROPÄISCHE PATENTANMELDUNG

(11) **EP 2 730 796 A1**
(43) Veröffentlichungstag der Anmeldung: **14.05.2014**
(21) Anmeldenummer: 13191815.3
(22) Anmeldetag: 06.11.2013
(51) Int. Cl.: F16D 25/062, F15B 15/14

(54) **Nehmerzylinder**

(30) Priorität: 08.11.2012 DE 102012220320
(71) Anmelder: Schaeffler Technologies GmbH & Co. KG, 91074 Herzogenaurach (DE)
(72) Erfinder: Wagner, Philippe, 45000 Orléans (FR); Derlath, Stefan, 39167 Irxleben (DE); Altmeppen, Berthold, 77830 Bühlertal (DE)

(57) **Zusammenfassung**

Die Erfindung betrifft einen Nehmerzylinder (1) für die Betätigung einer Kupplung eines Kraftfahrzeuges, welcher konzentrisch um eine Getriebeeingangswelle angeordnet ist und mit der Kupplung/dem Kupplungsdeckel (2) um eine Drehachse (A) rotiert, und dessen aus Kunststoff bestehendes Gehäuse (3) einen ringförmigen Druckraum (5) aufweist, in dem ein mit der Kupplung in Wirkverbindung stehender ringförmiger Kolben (4) axial bewegbar ist, wobei von einer stationären Fluidzuführeinrichtung (6) dem Druckraum des rotierenden Nehmerzylinders über eine Drehdurchführung Druckfluid zuführbar ist, so dass ein der Drehdurchführung zugeordneter Bereich (3.2) des Gehäuses aus einem sich von dem Kunststoffmaterial eines Grundkörpers (3.1) des Gehäuses unterscheidenden Kunststoffmaterial und/oder aus Stahl.

## Beschreibung

Die Erfindung betrifft einen Nehmerzylinder für die Betätigung einer Kupplung eines Kraftfahrzeuges, welcher konzentrisch um eine Getriebeeingangswelle angeordnet ist und mit der Kupplung/dem Kupplungsdeckel um eine Drehachse rotiert, und dessen aus Kunststoff bestehendes Gehäuse einen ringförmigen Druckraum aufweist, in dem ein mit der Kupplung in Wirkverbindung stehender ringförmiger Kolben axial bewegbar ist, wobei von einer stationären Fluidzuführeinrichtung über eine Drehdurchführung Druckfluid dem Druckraum des rotierenden Nehmerzylinders zuführbar ist.

Es sind Ausrückvorrichtungen für die Betätigung von Kupplungen von Kraftfahrzeugen bekannt, bei denen der konzentrische Nehmerzylinder und der Kupplungsdeckel zu einer funktionalen Einheit mit intern geschlossenem Kraftfluss zusammengefasst sind (deckelfester Ausrücker). Die Verbindung mit dem Kupplungsdeckel erfolgt üblicherweise über ein Wälzlager (Deckellager), welches zusätzlich zu einem Ausrücklager vorgesehen ist. Bei dieser Ausführung dreht sich der Nehmerzylinder nicht mit dem Kupplungsdeckel mit.

Allerdings können hier die von der Kurbelwelle herrührenden Schwingungen auf die Kupplung und damit auf das beispielsweise an einer Tellerfeder anliegende Ausrücklager und somit auch auf den Nehmerzylinder übertragen werden. Dies kann bei Bewegungen des Ausrücklagers im gesamten Ausrücksystem zu Druckimpulsen und schließlich am Kupplungspedal zu unerwünschten Vibrationen führen. Zudem stellen die eingesetzten Wälzlager einen hohen Kostenfaktor dar und nehmen einen beträchtlichen Bauraum ein.

Deshalb sehen andere bekannte Lösungen deckelfeste Ausrückvorrichtungen vor, die auf den Einsatz sowohl eines Deckellagers als auch eines Ausrücklagers verzichten. Bei diesen Ausrückvorrichtungen ist der konzentrische Nehmerzylinder derart an dem Kupplungsdeckel der Kupplung befestigt, dass er mit diesem rotiert. Das bedeutet aber, dass zur Realisierung der Zufuhr von Druckfluid von einer stationären Fluidzuführeinrichtung (auch als Stator bezeichnet) zu dem rotierenden Nehmerzylinder (auch als Rotor bezeichnet) eine Drehdurchführung vorgesehen sein muss. Bekanntermaßen gleiten dabei in der stationären Fluidzuführeinrichtung angeordnete Dichtungen an der Oberfläche des rotierenden Gehäuses des Nehmerzylinders.

In der DE 10 2008 027 885 A1 wird beispielsweise eine druckmittelbetätigte Kupplungseinrichtung beschrieben, bei der über eine Drehdurchführung eine Einspeisung eines Fluides in eine umlaufende Nehmerzylindereinrichtung durch eine stationäre Fluidzuleitung erfolgt. Zu diesem Zweck ist ein nicht umlaufendes Ringelement mit der Zuführleitung verbunden. Das Ringelement ist dabei über ein aus Gleitdichtringen gebildetes Bewegungsdichtungssystem auf der Außenwand des Gehäuses des Nehmerzylinders gelagert. Dabei ist vorgesehen, sowohl das stationäre Ringelement als auch das rotierende Nehmerzylindergehäuse aus Al-Druckguss oder aus Kunststoff herzustellen.

Andere bekannte deckelfeste Ausrücker weisen ein Nehmerzylindergehäuse aus Stahl auf.

Bei der Verwendung eines Aluminiumgehäuses (oder auch eines Stahlgehäuses) werden gute Oberflächeneigenschaften erzielt, die insbesondere für die Dichtungen an der Kontaktfläche von stationärem und rotierendem Teil wichtig sind. Allerdings ist der Einsatz bzw. die Herstellung eines Gehäuses aus Aluminium oder Stahl relativ kostspielig. Auch weist ein Nehmerzylinder mit einem Stahlgehäuse ein großes Gewicht auf. Ein Gehäuse aus Kunststoff ist dagegen kostengünstiger und leichter. Das für das Nehmerzylindergehäuse verwendete Kunststoffmaterial muss aber gute Festigkeitseigenschaften und eine hohe Temperaturbeständigkeit aufweisen, um die auftretenden Druckspannungen aufzunehmen. Dieser Kunststoff besitzt wiederum keine guten Oberflächeneigenschaften. Insbesondere mangelt es an der für die Dichtungslaufflächen notwendigen Gleitfähigkeit. Gerade an den Bereich der Drehdurchführung, das heißt an den mit dem Stator korrespondierenden Bereich des Nehmerzylinders/Rotors, werden aber hohe Anforderungen in Bezug auf die Oberflächenbeschaffenheit, insbesondere die Gleiteigenschaft, gestellt. Schlechte Oberflächeneigenschaften können einen schnellen Verschleiß der Dichtungen bzw. das Auftreten von Leckage im Bereich der Drehdurchführung bewirken.

Es besteht deshalb die Aufgabe der Erfindung darin, einen mit der Kupplung/dem Kupplungsdeckel um eine Drehachse rotierenden konzentrischen Nehmerzylinder zu schaffen, der ein kostengünstig herstellbares Gehäuse mit einem relativ geringen Gewicht sowie mit einer guten Oberflächenbeschaffenheit der Dichtungslaufflächen der Drehdurchführung aufweist.

Diese Aufgabe wird mit den Merkmalen des ersten Anspruchs gelöst. Vorteilhafte Ausgestaltungen ergeben sich aus den Unteransprüchen.

Bei einem Nehmerzylinder für die Betätigung einer Kupplung eines Kraftfahrzeuges, welcher konzentrisch um eine Getriebeeingangswelle angeordnet ist und mit der Kupplung/dem Kupplungsdeckel um eine Drehachse rotiert, und dessen aus Kunststoff bestehendes Gehäuse einen ringförmigen Druckraum aufweist, in dem ein mit der Kupplung in Wirkverbindung stehender ringförmiger Kolben axial bewegbar ist, wobei von einer stationären Fluidzuführeinrichtung dem Druckraum des rotierenden Nehmerzylinders über eine Drehdurchführung Druckfluid zuführbar ist, besteht erfindungsgemäß ein der Drehdurchführung zugeordneter Bereich des Gehäuses aus einem sich von dem Kunststoffmaterial eines Grundkörpers des Gehäuses unterscheidenden Kunststoffmaterial und/oder aus Stahl.

Dabei besteht der Grundkörper des Gehäuses aus einem ersten Kunststoffmaterial mit guten Festigkeitseigenschaften und hoher Temperaturbeständigkeit, welches vorzugsweise mit Glasfasern verstärkt ist. In vorteilhafter Weise besteht der Bereich der Drehdurchführung des Gehäuses aus einem zweiten Kunststoffmaterial mit guten Gleiteigenschaften.

Dieser Bereich ist vorzugsweise durch eine hülsenförmig den Grundkörper umgebende Schicht gebildet, die als zweites Kunststoffmaterial/zweite Kunststoffkomponente auf den Außenumfang des aus dem ersten Kunststoffmaterial/der ersten Kunststoffkomponenten bestehenden Grundkörper aufgebracht ist. Hierbei ist die aus der zweiten Kunststoffkomponenten bestehende Schicht an den Grundkörper angespritzt.

In vorteilhafter Weise ist das aus dem Grundkörper und dem Bereich/der Schicht bestehende Gehäuse über ein Zweikomponenten-Spritzgussverfahren hergestellt.

In ebenso vorteilhafter Weise kann der der Drehdurchführung zugeordnete Bereich des Gehäuses von einer Stahlhülse gebildet sein, die auf dem Außenumfang des aus einem Kunststoffmaterial bestehenden Gehäuses/Grundkörpers angeordnet sein. Vorzugsweise ist die Stahlhülse auf das Gehäuse/den Grundkörper gepresst, wobei zwischen der Stahlhülse und dem Gehäuse/dem Grundkörper zumindest zwei Dichtungen in Form von O-Ringen vorgesehen sind.

Die Erfindung wird anhand zweier Ausführungsbeispiele und zugehöriger Zeichnungen näher erläutert.

Es zeigen:
- Fig. 1: eine Schnittdarstellung einer ersten Ausführung eines erfindungsgemäßen Nehmerzylinders
- Fig. 2: einen Teilschnitt einer zweiten Ausführung eines erfindungsgemäßen Nehmerzylinders

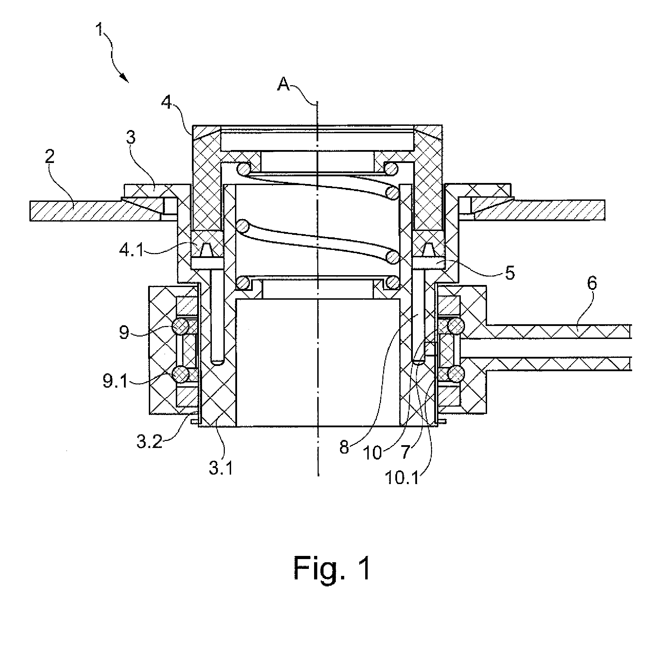

In Fig. 1 ist ein erstes Ausführungsbeispiel eines erfindungsgemäßen Nehmerzylinders 1 - auch als deckelfester Ausrücker bezeichnet - in Schnittdarstellung gezeigt. Der konzentrisch um eine Drehachse A angeordnete Nehmerzylinder 1 rotiert gemeinsam mit einem Kupplungsdeckel 2 einer nicht näher gezeigten Kupplung. Dabei ist ein Gehäuse 3 des Nehmerzylinders 1 an dem Kupplungsdeckel 2 befestigt. In dem Gehäuse 3 ist ein ringförmiger Kolben 4 mit einer dynamischen Dichtung 4.1, der einen Druckraum 5 begrenzt, axial bewegbar. Auf der Außenwand des mit dem Kupplungsdeckel 2 verbundenen und mit diesem rotierenden Gehäuses 3 ist eine stationäre Fuidzuführeinrichtung, die hier von einem Druckleitungsstutzen 6 gebildet wird, angeordnet. Über den Druckleitungsstutzen 6 gelangt bekanntermaßen mittels einer Drehdurchführung Fluid von einem externen Anschluss über eine radiale Bohrung 7 und einen Zuführkanal 8 des Gehäuses 3 in den Druckraum 5 des rotierenden Nehmerzylinders 1. Durch die Beaufschlagung mit Druckfluid wird in an sich bekannter Art und Weise eine axiale Verschiebung des Kolbens 4 erzielt, welcher wiederum die Kupplung (z. B. über eine Tellerfeder) betätigt. An der Drehdurchführung, die die Berührungsstelle von stationärem Druckleitungsstutzen 6 und rotierendem Gehäuse 3 darstellt, ist ein Dichtungssystem vorgesehen, welches beispielsweise zwei im Druckleitungsstutzen 6 angeordnete, als Radialwellendichtringe ausgebildete, Dichtungen 9, 9.1 aufweist. Die Dichtungen 9, 9.1 gleiten dabei an der Außenwand des rotierenden Gehäuses 3 an entsprechenden Dichtungslaufflächen 10, 10.1.

Dabei besteht das Gehäuse 3 des Nehmerzylinders 1 aus einem Grundkörper 3.1, welcher im Wesentlichen aus einem robusten und temperaturbeständigen Kunststoffmaterial hergestellt ist. Dieser Kunststoff kann beispielsweise mit Glasfasern verstärkt sein, um eine höhere Festigkeit zu erreichen. Diese zusätzlichen Bestandteile, wie in diesem Fall Glasfasern, bewirken allerdings eine raue Oberfläche. Um die für die Dichtungslaufflächen 10, 10.1 der Dichtungen 9, 9.1 notwendige glatte Oberfläche zu erreichen, wird gemäß einem ersten Ausführungsbeispiel in dem Bereich der Drehdurchführung eine zusätzliche Schicht 3.2 eines Kunststoffmaterials auf den Grundkörper 3.1 aufgebracht. Vorzugsweise geschieht dies über ein Zweikomponenten-Spritzgussverfahren. Es wird ein zweiter Kunststoff angespritzt, der optimale Oberflächen- und Gleiteigenschaften besitzt. Da die maximalen Beanspruchungen des Nehmerzylinders 1, z. B. bei der Kupplungsbetätigung, unter der Oberfläche des Gehäuses 3 auftreten, nimmt der entsprechend robust ausgeführte Kunststoff des Grundkörpers 3.1 die Druckspannungen auf.

Die aus einem Werkstoff mit guten Oberflächeneigenschaften bestehende Schicht 3.2, die im Bereich der Drehdurchführung, das heißt, im Kontaktbereich von rotierendem Gehäuse 3 und stationärem Druckleitungsstutzen 6 auf den Grundkörper 3.1 aufgetragen - angespritzt - wird und diesen vorzugsweise hülsenartig umgibt, sorgt für ein reibungs- und verschleißarmes Betriebsverhalten der Dichtungen 9. Um die Fluidzufuhr von dem Druckleitungsstutzen 6 in den Druckraum 5 des Nehmerzylinders 1 zu gewährleisten, weist die Schicht 3.2 im Bereich der radialen Bohrung 7 des Grundkörpers 3.1 eine radiale Durchgangsöffnung auf. Somit gelangt das Fluid über die Bohrung 7 und den Zuführkanal 8 in den Druckraum 5 und beaufschlagt hier in an sich bekannter Weise den Kolben 4.

Bei der Herstellung des erfindungsgemäßen Gehäuses 3 des Nehmerzylinders 1 mittels eines Zweikomponenten-Spritzgussverfahrens wird zunächst der Grundkörper 3.1 des Gehäuses 3 als ein erstes Kunststoffspritzgussbauteil aus einer ersten Kunststoffkomponenten mit guten Festigkeitseigenschaften und hoher Temperaturbeständigkeit geschaffen, wobei zusätzliche Bestandteile, wie beispielsweise Glasfasern, zur Verstärkung beigefügt werden können. Anschließend wird der aus einer zweiten Kunststoffkomponenten mit guten Oberflächeneigenschaften, insbesondere guten Gleiteigenschaften für die Dichtungslaufflächen 10, 10.1, bestehende Bereich 3.2 der Drehdurchführung an den Grundkörper 3.1 angespritzt.

Diese Ausführung des erfindungsgemäßen Nehmerzylinders 1 weist bei geringem Gewicht ein kostengünstig herstellbares Gehäuse 3 mit einer guten Oberflächenbeschaffenheit der Dichtungslaufflächen 10, 10.1 der Drehdurchführung auf.

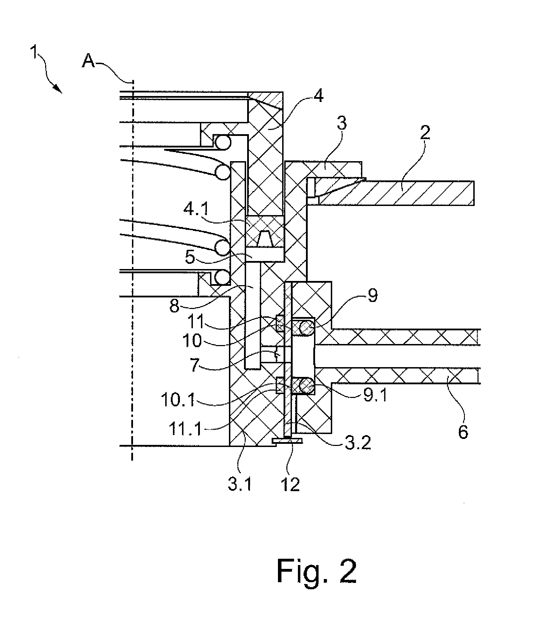

In Fig. 2 ist ein Teilschnitt eines zweiten Ausführungsbeispiels des erfindungsgemäßen Nehmerzylinders 1 dargestellt. Die Wirkungsweise des Nehmerzylinders 1 ist dabei analog der im ersten Ausführungsbeispiel beschriebenen Arbeitsweise eines deckelfesten Ausrückers. Auch hier ist das aus Kunststoff bestehende Gehäuse 3 an dem Kupplungsdeckel 2 befestigt, wodurch sich der Nehmerzylinder 1 mit der Kupplung mitdreht. Die Fluidzuführung von dem stationären Druckleitungsstutzen 6 zu dem rotierenden Nehmerzylinder 1 erfolgt ebenfalls mittels einer Drehdurchführung.

Im Unterschied zu dem ersten Ausführungsbeispiel ist an den aus einem robusten Kunststoffmaterial bestehenden Grundkörper 3.1 des Gehäuses 3 in dem Bereich 3.2 der Drehdurchführung eine Stahlhülse montiert. Die vorzugsweise auf den Außenumfang des Grundkörpers 3.1 aufgepresste Stahlhülse 3.2 bildet mit ihrer glatten Oberfläche die Dichtungslaufflächen 10, 10.1 für die rotierenden Dichtungen 9, 9.1. Zusätzlich sind zur Gewährleistung der Dichtheit des Systems zwischen dem Grundkörper 3.1 und der Stahlhülse 3.2 zwei Dichtungen in Form von O-Ringen 11, 11.1 vorgesehen. Die Stahlhülse 3.2 liegt dabei mit ihrem einen axialen Ende an einem radialen Vorsprung des Grundkörpers 3.1 des Gehäuses 3 an. Ein an dem Außenumfang des Grundkörpers 3.1 angeordneter Sicherungsring 12 dient an dem anderen axialen Ende der Stahlhülse 3.2 als Verliersicherung.

Auch hier weist die Stahlhülse 3.2 im Bereich der radialen Bohrung 7 des Grundkörpers 3.1 eine radiale Durchgangsöffnung auf, um die Fluidzufuhr von dem Druckleitungsstutzen 6 in den Druckraum 5 des Nehmerzylinders 1 zu gewährleisten.

Die Stahlhülse 3.2 kann beispielsweise mittels Tiefziehen hergestellt werden, womit eine preiswerte Lösung eines Nehmerzylinder 1 mit guten Oberflächeneigenschaften der Dichtungslaufflächen 10, 10.1 geschaffen wurde. Gegenüber einem vollständig aus Stahl bestehendem Gehäuse 3 weist er zudem ein reduziertes Gewicht auf.

### Bezugszeichenliste

- 1: Nehmerzylinder
- 2: Kupplungsdeckel
- 3: Gehäuse
- 3.1: Grundkörper
- 3.2: Bereich/Schicht/Stahlhülse
- 4: Kolben
- 4.1: Dichtung
- 5: Druckraum
- 6: Fluidzuführeinrichtung/Druckleitungsstutzen
- 7: Bohrung
- 8: Zuführkanal
- 9: Dichtung
- 9.1: Dichtung
- 10: Dichtungslauffläche
- 10.1: Dichtungslauffläche
- 11: O-Ring
- 11.1: O-Ring
- 12: Sicherungsring
- A: Drehachse

## Patentansprüche

1. Nehmerzylinder für die Betätigung einer Kupplung eines Kraftfahrzeuges, welcher konzentrisch um eine Getriebeeingangswelle angeordnet ist und mit der Kupplung/dem Kupplungsdeckel (2) um eine Drehachse (A) rotiert, und dessen aus Kunststoff bestehendes Gehäuse (3) einen ringförmigen Druckraum (5) aufweist, in dem ein mit der Kupplung in Wirkverbindung stehender Kolben (4) axial bewegbar ist, wobei von einer stationären Fluidzuführeinrichtung (6) dem Druckraum (5) des rotierenden Nehmerzylinders (1) über eine Drehdurchführung Druckfluid zuführbar ist, **dadurch gekennzeichnet, dass** ein der Drehdurchführung zugeordneter Bereich (3.2) des Gehäuses (3) aus einem sich von dem Kunststoffmaterial eines Grundkörpers (3.1) des Gehäuses (3) unterscheidenden Kunststoffmaterial und/oder aus Stahl besteht.

2. Nehmerzylinder nach Anspruch 1, **dadurch gekennzeichnet, dass** der Grundkörper (3.1) des Gehäuses (3) aus einem ersten Kunststoffmaterial mit guten Festigkeitseigenschaften und hoher Temperaturbeständigkeit besteht.

3. Nehmerzylinder nach Anspruch 1 oder 2, **dadurch gekennzeichnet, dass** der der Drehdurchführung zugeordnete Bereich (3.2) des Gehäuses (3) aus einem zweiten Kunststoffmaterial mit guten Gleiteigenschaften besteht.

4. Nehmerzylinder nach Anspruch 2 oder 3, **dadurch gekennzeichnet, dass** der Bereich (3.2) durch eine den Grundkörper (3.1) umgebende Schicht gebildet ist, die als zweites Kunststoffmaterial/zweite Kunststoffkomponente auf den Außenumfang des aus dem ersten Kunststoffmaterial/der ersten Kunststoffkomponenten bestehenden Grundkörper (3.1) aufgebracht ist.

5. Nehmerzylinder nach Anspruch 4, **dadurch gekennzeichnet, dass** die aus der zweiten Kunststoffkomponenten bestehende Schicht (3.2) an den Grundkörper (3.1) angespritzt ist.

6. Nehmerzylinder nach einem der Ansprüche 2 bis 5, **dadurch gekennzeichnet, dass** das aus dem Grundkörper (3.1) und dem Bereich/der Schicht (3.2) bestehende Gehäuse (3) über ein Zweikomponenten-Spritzgussverfahren hergestellt ist.

7. Nehmerzylinder nach einem der Ansprüche 2 bis 6, **dadurch gekennzeichnet, dass** die Schicht (3.2) den Grundkörper (3.1) hülsenförmig umgibt.

8. Nehmerzylinder nach Anspruch 1 oder 2, **dadurch gekennzeichnet, dass** der der Drehdurchführung zugeordnete Bereich (3.2) des Gehäuses (3) von einer Stahlhülse gebildet ist, die auf dem Außenumfang des aus einem Kunststoffmaterial bestehenden Gehäuses (3)/Grundkörpers (3.1) angeordnet ist.

9. Nehmerzylinder nach einem der Ansprüche 1, 2 oder 8, **dadurch gekennzeichnet, dass** die Stahlhülse (3.2) auf das Gehäuse (3)/den Grundkörper (3.1) gepresst ist.

10. Nehmerzylinder nach einem der Ansprüche 1, 2, 8 oder 9, **dadurch gekennzeichnet, dass** zwischen der Stahlhülse (3.2) und dem Gehäuse (3)/dem Grundkörper (3.1) zumindest zwei Dichtungen in Form von O-Ringen (11, 11.1) vorgesehen sind.
